# EUROPÄISCHE PATENTSCHRIFT

(11) **EP 1 845 038 B1**
(45) Veröffentlichungstag und Bekanntmachung des Hinweises auf die Patenterteilung: **20.01.2010**
(21) Anmeldenummer: 07105470.4
(22) Anmeldetag: 02.04.2007
(51) Int. Cl.: B65G 47/26, B65G 13/071

(54) **Tragrolle für eine Staurollenbahn**
Carrier roller for an accumulation roller conveyor
Rouleau porteur pour un convoyeur accumulateur à rouleaux

(30) Priorität: 15.04.2006 DE 202006006106 U
(43) Veröffentlichungstag der Anmeldung: 17.10.2007
(73) Patentinhaber: HaRo Anlagentechnik GmbH, 59602 Rüthen (DE)
(72) Erfinder: LÖSEKE, Markus, 59602, Rüthen (DE)
(74) Vertreter: Patentanwälte Dr. Solf & Zapf

(56) Entgegenhaltungen:
- DE-A1- 3 616 840
- DE-A1- 4 135 565
- DE-A1- 4 333 625
- FR-A- 1 418 208
- FR-A1- 2 103 436

## Beschreibung

Die vorliegende Erfindung betrifft eine Tragrolle für eine Staurollenbahn, bestehend aus einer zentralen Rollenachse und einem koaxial auf der Rollenachse gelagerten, hohlzylindrischen bzw. rohrförmigen Rollenmantel sowie einem auf einem Ende der Rollenachse sitzenden Antriebsrad, dessen Antriebsmoment über eine Rutschkupplungsanordnung derart auf den Rollenmantel übertragbar ist, dass sich das jeweils auf den Rollenmantel übertragene Antriebsmoment als Überlagerung (Summe) von zwei Teilmomenten einstellt, und zwar eines ersten, gewichtsabhängigen, d. h. von der Höhe einer radial, zur Rollenachse senkrecht auf den Rollenmantel wirkenden Gewichtskraft abhängigen Teilmomentes und eines zweiten, gewichtsunabhängigen, als Basiswert über Einstellmittel manuell einstellbaren Teilmomentes.

Weiterhin betrifft die Erfindung auch eine Staurollenbahn mit einer Vielzahl von solchen insbesondere zueinander parallel und horizontal angeordneten Tragrollen.

Bei Staurollenbahnen handelt es sich um Stückgutförderer, die zum kraftschlüssigen Antrieb in den einzelnen Tragrollen Rutschkupplungen beinhalten, so dass solche Förderer auch als Friktionsförderer bezeichnet werden. Die Antriebsräder der Tragrollen, üblicherweise Kettenräder, werden gemeinsam von einem umlaufenden Antriebselement, üblicherweise einer Kette, angetrieben, und das jeweils durch Reibschluß über die Rutschkupplungen auf die Rollenmäntel übertragene Antriebsmoment soll gerade so groß sein, dass die schwersten Stückgüter (z. B. Kästen, Paletten, Gitter-Körbe und dergleichen) sicher transportiert werden. Wenn die Stückgüter angehalten, d. h. gestaut werden, bleiben auch die Rollenmäntel stehen, werden aber weiter mit einer Mitnahmekraft beaufschlagt, die einen Staudruck auf die Stückgüter bewirkt.

DE 41 35 565 A1 beschreibt eine Staurolle mit einer Rutschkupplungsanordnung. Die Rutschkupplung ist zur Variation des Antriebsmomentes über innerhalb des Rollenmantels angeordnete Einstellmittel einstellbar.

In der DE 25 57 567 C2 sind zunächst als Stand der Technik Tragrollen beschrieben, deren Rutschkupplungen bezüglich der Höhe ihres Kraftschlusses manuell einstellbar sind, um das übertragene Antriebsmoment variieren zu können. Dazu wird jeweils das Kettenrad über Schraubenmuttern axial auf der feststehenden Rollenachse mehr oder weniger fest gegen die Rutschkupplung verschoben, um die erforderliche Flächenpressung eines Rutschkupplungsbelages einzustellen. Sollen Güter mit unterschiedlichen Gewichten nacheinander gefördert werden, muß nachteiligerweise bei allen Tragrollen eine neue Einstellung erfolgen.

Deshalb ist in der DE 25 57 567 C2 als eigentliche Erfindung eine Ausführung beschrieben, bei der die Rutschkupplungen derart ausgebildet sind, dass sich das jeweils übertragene Antriebsmoment selbsttätig in Abhängigkeit vom senkrecht auf den Rollenmantel wirkenden Gewicht des Transportgutes einstellt. Dazu ist auf jeder Stirnseite des Rollenmantels ein ringförmiger Reibungskörper drehmomentschlüssig mit der rotierenden Rollenachse verbunden, wobei jeder Reibungskörper über Reibflächen in radialer Richtung mit einem nabenartigen Rollenboden des Tragrollenmantels in Verbindung steht. Dadurch ist der Reibschluß über die radialen Reibflächen abhängig von der Gewichtskraft des Transportgutes. Diese Ausführung hat sich in der Praxis über viele Jahre hinweg sehr gut bewährt. Allerdings wurde festgestellt, dass die Mitnahme der Transportgüter nicht allein von deren Gewicht, sondern zum Teil auch von deren Beschaffenheit abhängt, insbesondere von der Form und Art der jeweiligen Aufstandsfläche. So kann es im Falle von beschädigten, z.B. verbeulten Behälterböden zu Mitnahmeproblemen kommen.

Aus der Literaturstelle "Stückgutförderer", Handbuch der Materialflusstechnik, expert verlag, 2. Auflage 2003, Seiten 81 bis 84, ist deshalb auch eine gattungsgemäße Ausführungsform bekannt, bei der sich das jeweils übertragene Antriebsmoment als Überlagerung, d. h. als Summe von zwei Teilmomenten einstellt, und zwar eines ersten, gewichtsabhängigen Teilmomentes und eines zweiten, gewichtsunabhängigen Teilmomentes, wobei das zweite Teilmoment als Basiswert über Einstellmittel manuell einstellbar ist. Bei dieser Ausführung besteht jede Rutschkupplung aus einem ringförmigen Reibkörper, der fest mit dem Rollenmantel verbunden ist, und der einerseits über radiale Reibflächen mit der rotierenden Rollenachse in Verbindung steht, und andererseits wird der Reibkörper in axialer Richtung von eine Friktionsscheibe beaufschlagt, deren axiale Andruckkraft über einen Stellring veränderbar ist. Genauere Konstruktionsdetails dieser Verstellmittel sind in der genannten Literaturstelle jedoch nicht beschrieben. Da aber die Friktionsscheibe und der Stellring außen vor dem Stirnende der Tragrolle auf der Rollenachse angeordnet sind, führt diese Ausführung zu einer großen axialen Baulänge. Außerdem sind diese Verstellmittel völlig ungeschützt gegen mechanische Einflüsse und Verschmutzungen.

Der vorliegenden Erfindung liegt die Aufgabe zugrunde, eine Tragrolle der eingangs genannten, gattungsgemäßen Art zu schaffen, die sich durch sichere, störungsunanfällige Betriebseigenschaften, kompakte Bauform sowie verbesserte Konstruktion mit guten und komfortablen Einstellmöglichkeiten auszeichnet.

Die Aufgabe wird gemäß der Erfindung durch eine Tragrolle für eine Staurollenbahn gemäß Anspruch 1 gelöst.

Durch die Erfindung wird eine kurze axiale Baulänge erreicht sowie ein guter Schutz gegen mechanische Beschädigungen und Verschmutzung, was die angestrebten sicheren und störungsunanfälligen Eigenschaften zur Folge hat.

Weitere vorteilhafte Ausgestaltungsmerkmale der Erfindung sind in den abhängigen Ansprüchen sowie der folgenden Beschreibung enthalten.

Anhand eines bevorzugten, in der Zeichnung veranschaulichten Ausführungsbeispiels soll die Erfindung genauer erläutert werden. Dabei zeigen:
- Fig. 1: eine Ansicht einer erfindungsgemäßen Tragrolle in Richtung einer Förderachse (Bewegungsrichtung des zu fördernden Transportgutes), und zwar im montierten, zwischen zwei seitlichen Tragschienen einer Staurollenbahn befestigten Zustand,
- Fig.2: einen Axialschnitt durch die erfindungsgemäße Tragrolle (ohne Tragschienen) in der Schnittebene II - II gemäß Fig. 1 und
- Fig.3: eine perspektivische Explosionsdarstellung der Einzelteile der erfindungsgemäßen Tragrolle.

Eine erfindungsgemäße Tragrolle 1 besteht aus einer zentralen Rollenachse 2 und einem koaxial auf der Rollenachse 2 gelagerten, hohlzylindrischen bzw. rohrförmigen Rollenmantel 4. Auf einem Ende der Rollenachse 2 sitzt ein Antriebsrad 6, welches insbesondere als Kettenrad ausgebildet ist und dessen Antriebsmoment über eine Rutschkupplungsanordnung derart auf den Rollenmantel 4 übertragbar ist, dass sich das jeweils auf den Rollenmantel durch Reibschluß übertragene Antriebsmoment als Überlagerung (Summe) von zwei Teilmomenten einstellt, und zwar eines ersten, gewichtsabhängigen, d. h. von der Höhe einer radial, zur Rollenachse 2 senkrecht auf den Rollenmantel 4 wirkenden Gewichtskraft F_{G} abhängigen Teilmomentes und eines zweiten, gewichtsunabhängigen, als Basiswert über Einstellmittel 10 manuell einstellbaren Teilmomentes.

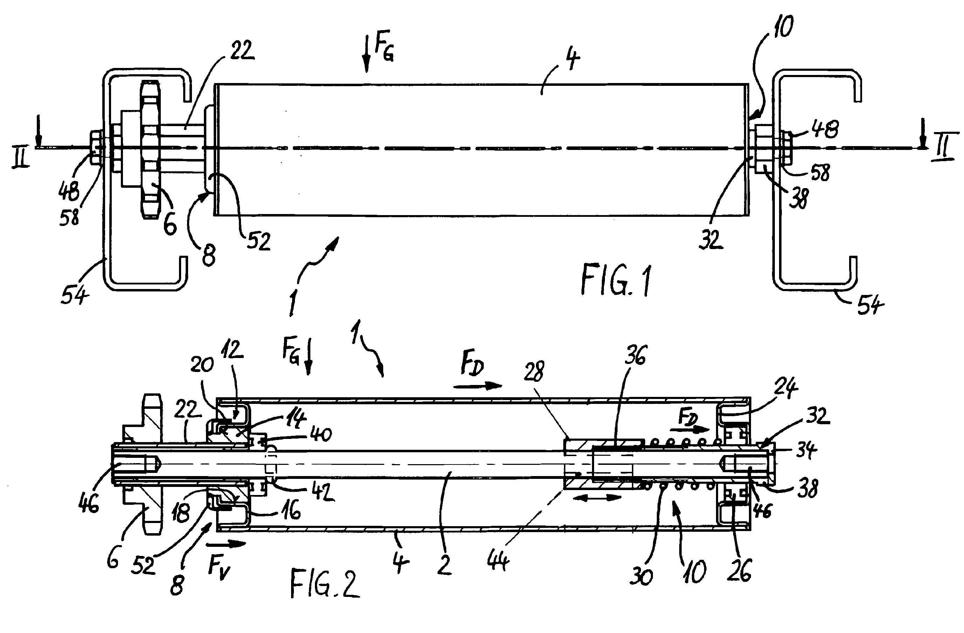

Wie sich insbesondere aus Fig. 2 ergibt, ist erfindungsgemäß vorgesehen, dass die Einstellmittel 10 zum Einstellen des zweiten Teilmomentes (Basiswertes) im Wesentlichen innerhalb des Rollenmantels 4 untergebracht sind, und zwar im Bereich der Stirnseite, die von dem Antriebsrad 6 wegweist. Die Rutschkupplungsanordnung 8 besteht deshalb aus einer einzelnen, im Bereich des anderen, dem Antriebsrad 6 zugekehrten Stirnendes des Rollenmantels 4 angeordneten Rutschkupplung 12. Diese Rutschkupplung 12 besteht aus einem inneren, drehmomentschlüssig mit dem Antriebsrad 6 verbundenen, ring- oder hülsenförmigen Reibelement 14 und einem äußeren, fest mit dem Rollenmantel 4 verbundenen Reibelement 16. Dabei wird das äußere Reibelement 16 von einem naben- bzw. kappenartigen Rollenboden gebildet, der auch das stirnseitige Ende des Rollenmantels 4 verschließt. Die beiden Reibelemente 14, 16 stehen einerseits in radialer Richtung über erste Reibflächen 18 und andererseits in axialer Richtung über zweite Reibflächen 20 miteinander in Verbindung. Über die ersten, radialen Reibflächen 18 ist das erste, gewichtsabhängige Teilmoment übertragbar und über die zweiten, axialen Reibflächen 20 das zweite, gewichtsunabhängige und manuell über die Einstellmittel 10 einstellbare Teilmoment. Dazu sind die Einstellmittel 10 zur Veränderung einer axialen Vorspannkraft F_{V} der zweiten Reibflächen 20 ausgelegt.

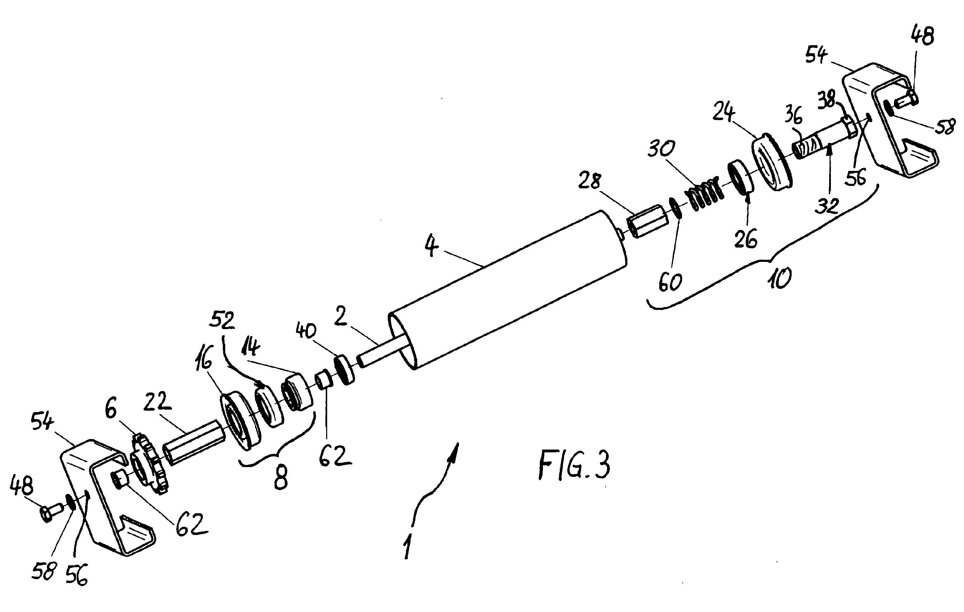

Wie sich insbesondere aus Fig. 2 und 3 ergibt, besteht das innere Reibelement 14 aus zwei Abschnitten mit verschiedenen Durchmessern, die über eine radiale Stufenfläche ineinander übergehen. Dabei sind die ersten Reibflächen 18 im Bereich der äußeren Umfangsfläche insbesondere des im Durchmesser größeren Abschnittes des inneren Reibelementes 14 gebildet. Die zweiten Reibflächen 20 liegen im Bereich der Übergangsringstufe zwischen den beiden Abschnitten mit unterschiedlichen Durchmessern. Der im Durchmesser kleinere Abschnitt ist dem Antriebsrad 6 zugewandt.

Das Antriebsrad 6 und das innere Reibelement 14 sitzen drehmomentschlüssig auf einer gemeinsamen, drehbar auf der ortsfest, nicht-drehbar zu montierenden Rollenachse 2 gelagerten Mitnehmerhülse 22. Die Mitnehmerhülse 22 weist einen von der Kreisform abweichenden, insbesondere polygonalen, beispielsweise wie dargestellt sechseckigen Außenquerschnitt auf, und das Antriebsrad 6 sowie das innere Reibelement 14 sitzen mit entsprechend angepassten Öffnungen drehfest auf der Mitnehmerhülse 22.

Im Bereich seines der Rutschkupplung 12 axial gegenüberliegenden Stirnendes ist der Rollenmantel 4 frei drehbar auf der Rollenachse 2 gelagert. Dazu ist im dargestellten Beispiel vorgesehen, dass zwischen einem kappen-bzw. nabenartigen, fest mit dem Rollenmantel 4 verbundenen Rollenboden 24 und der Rollenachse 2 ein Drehlager 26 angeordnet ist.

Die Einstellmittel 10 beaufschlagen den Rollenmantel 4 von innen her relativ zur feststehenden Rollenachse 2 derart in axialer Richtung mit einer einstellbaren Druckkraft F_{D}, dass diese Druckkraft F_{D} über den - als Zugelement fungierenden - Rollenmantel 4 als Vorspannkraft F_{V} auf die Rutschkupplung 12 übertragen wird. Innerhalb des Rollenmantels 4 ist koaxial auf der Rollenachse 2 zwischen einem Stellkörper 28 und dem der Rutschkupplung 12 gegenüberliegenden Stirnende des Rollenmantels 4 eine Druckfeder 30 angeordnet, deren Vorspannung bzw. Druckkraft F_{D} mittels einer Einstellschraube 32 veränderbar ist. Der Stellkörper 28 ist hülsen- bzw. buchsenartig ausgebildet und axial verschiebbar, aber gegen Verdrehen gesichert auf der Rollenachse 2 geführt. Die Einstellschraube 32 ist als Hohlschraube koaxial auf der Rollenachse 2 drehbar angeordnet, dabei aber axial zumindest in Richtung der Druckfeder 30 fixiert. Dazu stützt sich ein radialer Ringbund 34 axial am freien Stirnende der Rollenachse 2 ab (Fig. 2). Die Einstellschraube 32 ist einendig über ein Stellgewinde 36 mit dem Stellkörper 28 verbunden. Anderendig weist die Einstellschraube 32 einen von außerhalb des Rollenmantels 4 zugänglich angeordneten Kraftangriff 38 für ein Drehwerkzeug auf. Die Druckfeder 30 sitzt als Schraubenfeder koaxial auf der Einstellschraube 32 und wirkt auf der dem Stellkörper 28 axial gegenüberliegenden Seite mittelbar über das Drehlager 26 und den Rollenboden 24 auf den Rollenmantel 4. Das Drehlager 26 ist deshalb als Radial- und Axiallager ausgeführt. Der Kraftfluss der Druckkraft F_{D} wird weiter über den Rollenmantel 4 auf das äußere Reibelement 16 der Rutschkupplung 12 übertragen und wirkt hier folglich als Vorspannkraft F_{V} auf die axialen Reibflächen 20. Das innere Reibelement 14 der Rutschkupplung 12 ist in axialer Richtung gegen die Vorspannkraft F_{V} an einem auf der Rollenachse 2 fixierten Lager 40 (Axiallager) abgestützt. Dieses Lager 40 ist seinerseits beispielsweise durch einen radialen Vorsprung 42 der Rollenachse 2 abgestützt.

Für die beschriebene Führung des Stellkörpers 28 auf der Rollenachse 2 kann vorgesehen sein, dass die Rollenachse 2 seitliche Ausnehmungen 44 z. B. nach Art von gegenüberliegenden, zueinander parallelen Schlüsselflächen aufweist, und dass der Stellkörper 28 mit korrespondierenden, nach innen ragenden Fortsätzen in diese Ausnehmungen 44 (siehe Fig. 2) so eingreift, dass einerseits die axiale Verschiebbarkeit, andererseits auch die Sicherung gegen relatives Verdrehen gewährleistet sind.

Durch die beschriebene konstruktive Ausgestaltung ist der Rollenmantel 4 über den Rollenboden 24 und das Drehlager 26 mittelbar auf der Rollenachse 2 gelagert, und zwar über die auf der Rollenachse 2 sitzende Einstellschraube 32.

### Die Funktion der Einstellmittel 10 ist wie folgt:

Aufgrund der axialen Abstützung der Einstellschraube 32 an der Rollenachse 2 erfolgt durch Verdrehen der Einstellschraube 32 eine axiale Verschiebung des Stellkörpers 28 auf der Rollenachse 2. Dadurch ändert sich der axiale Abstand zwischen dem als Feder-Widerlager fungierenden Drehlager 26 und dem ebenfalls die Druckfeder 30 abstützenden Stellkörper 28. Folglich ändert sich auch die Druckkraft F_{D} der Druckfeder 30 und damit über den Rollenmantel 4 auch die axiale Vorspannkraft F_{V} der Rutschkupplung 12. Diese Einstellung ist sehr komfortabel, da lediglich der geringfügig axial über den Rollenmantel 4 vorstehende Kraftangriff 38 der Einstellschraube 32 mit einem geeigneten Werkzeug gedreht zu werden braucht.

Zur Montagebefestigung der erfindungsgemäßen Tragrolle 1 in einer Rollenbahn weist die Rollenachse 2 an beiden Stirnenden jeweils eine axiale Gewindebohrung 46 für eine Montageschraube 48 auf. Die Einstellschraube 32 weist deshalb im Bereich ihres - bevorzugt als Außenpolygon, insbesondere Außensechskant, ausgebildeten - Kraftangriffes 38 eine mit der Gewindebohrung 46 der Rollenachse 2 fluchtende Durchführöffnung 50 für die zugehörige Montageschraube 48 auf. Die Montageschraube 48 dient auf dieser Seite dadurch gleichzeitig auch zum Fixieren (Kontern) der Einstellschraube 32 gegen ungewolltes Verstellen.

In den Zeichnungsfiguren ist noch ein kappenartiges Abdeckelement 52 zu erkennen, welches die Rutschkupplung 12 auf ihrer dem Antriebsrad 6 axial zugewandten Seite abdeckt. Dazu liegt das ringkappenartige Abdeckelement 52 mit einem inneren Umfangsrand fest an dem inneren Reibelement 14 an und übergreift mit einem äußeren, axial ausgerichteten Kappenabschnitt etwas das äußere Reibelement 16 bzw. den kappenartigen Rollenboden des Rollenmantels 4. Durch diese vorteilhafte Ausgestaltung wird die Rutschkupplung effektiv gegen Verschmutzung und sonstige Einflüsse geschützt.

Wie sich aus Fig. 1 und 3 ergibt, wird die Tragrolle 1 zwischen zwei seitlichen Tragschienen 54 montiert, indem die Montageschrauben 48 jeweils durch eine Öffnung 56 der jeweiligen Tragschiene 54 in die Gewindebohrung 46 der Rollenachse 2 fest eingeschraubt werden. Gemäß Fig. 3 können dabei übliche Unterlegscheiben 58 verwendet werden.

Ferner sind in Fig. 3 noch einige Einzelteile erkennbar, und zwar eine Unterlegscheibe 60 zur Anordnung zwischen dem Stellkörper 28 und der Druckfeder 30 sowie zwei Gleitlagerbuchsen 62 für die Mitnehmerhülse 22.

Die Tragschienen 54 sind bevorzugt von C-Profilen (offenen Kastenprofilen) gebildet, wobei die Antriebsräder 6 der Tragrollen 1 der Staurollenbahn zusammen mit einem in der Zeichnung nicht dargestellten, umlaufend antreibbaren Antriebselement (insbesondere Kette) innerhalb des zugehörigen C-Profils angeordnet sind (siehe hierzu Fig.1).

Ein weiterer Gegenstand der Erfindung ist ein Hilfswerkzeug zum Messen des jeweils über die Rutschkupplungsanordnung 8 auf den Rollenmantel 4 übertragenen Antriebsmomentes. Mit diesem Hilfswerkzeug ist es auf einfache und genaue Weise möglich, alle Tragrollen 1 der Staurollenbahn bezüglich des Antriebsmoments gleich einstellen zu können.

## Patentansprüche

1. Tragrolle (1) für eine Staurollenbahn, bestehend aus einer zentralen Rollenachse (2) und einem koaxial auf der Rollenachse (2) gelagerten Rollenmantel (4) sowie einem auf einem Ende der Rollenachse (2) sitzenden Antriebsrad (6), dessen Antriebsmoment über eine Rutschkupplungsanordnung (8) derart auf den Rollenmantel (4) übertragbar ist, dass sich das jeweils auf den Rollenmantel (4) übertragene Antriebsmoment als Überlagerung von zwei Teilmomenten einstellt, und zwar eines ersten, gewichtsabhängigen, d. h. von der Höhe einer radial, zur Rollenachse (2) senkrecht auf den Rollenmantel (4) wirkenden Gewichtskraft (F_{G}) abhängigen Teilmomentes und eines zweiten, gewichtsunabhängigen, als Basiswert über Einstellmittel (10) manuell einstellbaren Teilmomentes,
**dadurch gekennzeichnet, dass** die Einstellmittel (10) zum Einstellen des zweiten Teilmomentes innerhalb des Rollenmantels (4) angeordnet sind, wobei die Rutschkupplungsanordnung (8) aus einer einzelnen, im Bereich eines dem Antriebsrad (6) zugekehrten Stirnendes des Rollenmantels (4) angeordneten Rutschkupplung (12) mit einem inneren, drehmomentschlüssig mit dem Antriebsrad (6) verbundenen Reibelement (14) und einem äußeren, fest mit dem Rollenmantel (4) verbundenen Reibelement (16) besteht, wobei die beiden Reibelemente (14, 16) in radialer Richtung über erste Reibflächen (18) und in axialer Richtung über zweite Reibflächen (20) in Verbindung stehen, wobei über die ersten Reibflächen (18) das erste Teilmoment und über die zweiten Reibflächen (20) das zweite Teilmoment übertragbar sind, und wobei innerhalb des Rollenmantels (4) auf der Rollenachse (2) zwischen einem Stellkörper (28) und dem von der Rutschkupplung (12) entfernt liegenden Stirnende des Rollenmantels (4) eine Druckfeder (30) angeordnet ist, deren Vorspannung mittels einer Einstellschraube (32) veränderbar ist.

2. Tragrolle nach Anspruch 1,
**dadurch gekennzeichnet, dass** die Einstellmittel (10) zur Veränderung einer axialen Vorspannkraft (F_{V}) der zweiten Reibflächen (20) ausgelegt sind.

3. Tragrolle nach Anspruch 1 oder 2,
**dadurch gekennzeichnet, dass** das Antriebsrad (6) und das innere Reibelement (14) der Rutschkupplung (12) drehmomentschlüssig auf einer gemeinsamen, drehbar auf der ortsfest, nicht-drehbar zu montierenden Rollenachse (2) gelagerten Mitnehmerhülse (22) sitzen.

4. Tragrolle nach einem der Ansprüche 1 bis 3,
**dadurch gekennzeichnet, dass** derRollenmantel(4)imBereich seines von der Rutschkupplung (12) entfernt liegenden Stirnendes frei drehbar relativ zu der Rollenachse (2) gelagert ist, wozu insbesondere zwischen einem kappenartigen, fest mit dem Rollenmantel (4) verbundenen Rollenboden (24) und der Rollenachse (2) ein Drehlager (26) angeordnet ist.

5. Tragrolle nach einem der Ansprüche 1 bis 4,
**dadurch gekennzeichnet, dass** die Einstellmittel (10) den Rollenmantel (4) von innen her relativ zur feststehenden Rollenachse (2) derart in axialer Richtung mit einer einstellbaren Druckkraft (F_{D}) beaufschlagen, dass diese Druckkraft (F_{D}) über den - als Zugelement fungierenden - Rollenmantel (4) als Vorspannkraft (F_{V}) auf die Rutschkupplung (12) übertragen wird.

6. Tragrolle nach einem der Ansprüche 1 bis 5,
**dadurch gekennzeichnet, dass** der buchsenartig ausgebildete Stellkörper (28) axial verschiebbar, aber gegen Verdrehen gesichert auf der Rollenachse (2) sitzt, wobei die Einstellschraube (32) als Hohlschraube koaxial auf der Rollenachse (2) drehbar, aber axial fixiert angeordnet ist und einendig über ein Stellgewinde (36) mit dem Stellkörper (28) verbunden ist und anderendig einen von außerhalb des Rollenmantels (4) zugänglich angeordneten Kraftangriff (38) für ein Drehwerkzeug aufweist.

7. Tragrolle nach einem der Ansprüche 1 bis 6,
**dadurch gekennzeichnet, dass** dieDruckfeder(30)als Schraubenfeder koaxial auf der Einstellschraube (32) sitzt und auf der dem Stellkörper (28) gegenüber liegenden Seite insbesondere gegen das Drehlager (26) des Rollenbodens (24) wirkt.

8. Tragrolle nach einem der Ansprüche 1 bis 7,
**dadurch gekennzeichnet, dass** die Rutschkupplung (12) bzw. deren inneres Reibelement (14) in axialer Richtung an einem auf der Rollenachse (2) fixierten Lager (40) gegen die Vorspannkraft (F_{V}) abgestützt ist.

9. Tragrolle nach einem der Ansprüche 1 bis 8,
**dadurch gekennzeichnet, dass** zur Montagebefestigung in einer Rollenbahn die Rollenachse (2) an beiden Stirnenden axiale Gewindebohrungen (46) zum Einschrauben von Montageschrauben (48) aufweist.

10. Tragrolle nach Anspruch 9,
**dadurch gekennzeichnet, dass** dieEinstellschraube(32)im Bereich ihres - bevorzugt als Außenpolygon ausgebildeten - Kraftangriffs (38) eine mit der Gewindebohrung (46) der Rollenachse (2) fluchtende Durchführöffnung (50) für eine der Montageschrauben (48) aufweist, die dadurch gleichzeitig auch zum Kontern der Einstellschraube (32) dient.

11. Tragrolle nach einem der Ansprüche 1 bis 10,
**dadurch gekennzeichnet, dass** dieRutschkupplung(12)auf ihrer dem Antriebsrad (6) axial zugewandten Seite von einem kappenartigen Abdeckelement (52) abgedeckt ist.

12. Staurollenbahn mit einer Vielzahl von insbesondere zueinander parallel und horizontal angeordneten Tragrollen (1) nach einem der vorhergehenden Ansprüche.

13. Staurollenbahn nach Anspruch 12,
**dadurch gekennzeichnet, dass** jedeTragrolle(1)zwischenzwei seitlichen Tragschienen (54) befestigt ist, indem auf jeder Seite eine Montageschraube (48) durch eine Lochöffnung (56) der jeweiligen Tragschiene (54) hindurch fest in eine axiale Gewindebohrung (46) der Rollenachse (2) eingeschraubt ist.

14. Staurollenbahn nach Anspruch 12 oder 13,
**dadurch gekennzeichnet, dass** die Tragschienen (54) von C-Profilen gebildet sind, wobei die Antriebsräder (6) der Tragrollen (1) zusammen mit einem umlaufend antreibbaren, insbesondere als Kette ausgebildeten Antriebselement innerhalb des zugehörigen C-Profils angeordnet sind.

15. Hilfswerkzeug mit einer Tragrolle (1) nach einem der Ansprüche 1 bis 11 bzw. bei einer Staurollenbahn nach einem der Ansprüche 12 bis 14, und zwar zum Messen des jeweils über die Rutschkupplungsanordnung (8) auf den Rollenmantel (4) übertragenen Antriebsmomentes, zwecks Einstellung der einzelnen Tragrollen (1).

## Claims

1. A carrying roller (1) for an accumulation roller conveyor, consisting of a central roller shaft (2) and a roller casing (4), mounted coaxially on the roller shaft (2), as well as a drive wheel (6), located on one end of the roller shaft (2), whose drive torque can via a slipping clutch arrangement (8) be transmitted to the roller casing (4) in such a manner that the drive torque transmitted to the roller casing (4) in each instance occurs as a superposition of two partial moments, namely a first, weight-dependent partial moment, i.e. a partial moment dependent on the height of a weight (F_{G}) acting on the roller casing (4) radially and in a manner perpendicular to the roller shaft (2), and a second, weight-independent partial moment manually adjustable as a base value via adjusting means (10), **characterised in that** the adjusting means (10) for adjustment of the second partial moment are arranged within the roller casing (4), wherein the slipping clutch arrangement (8) consists of an individual slipping clutch (12) arranged in the region of an end face, facing the drive wheel (6), of the roller casing (4), which slipping clutch (12) has an inner friction element (14) connected to the drive wheel (6) in a torque-locked manner and an outer friction element (16) securely connected to the roller casing (4), wherein the two friction elements (14, 16) are connected in a radial direction via first friction surfaces (18) and in an axial direction via second friction surfaces (20), wherein the first partial moment can be transmitted via the first friction surfaces (18) and the second partial moment via the second friction surfaces (20), and wherein a pressure spring (30) is arranged within the roller casing (4), on the roller shaft (2) so as to be between an adjustment body (28) and the end face, remote from the slipping clutch (12), of the roller casing (4), the initial tension of this spring (30) being able to be altered by means of an adjusting screw (32).

2. A carrying roller according to claim 1, **characterised in that** the adjusting means (10) are designed to alter an axial pretensioning force (F_{V}) of the second friction surfaces (20).

3. A carrying roller according to claim 1 or 2, **characterised in that** the drive wheel (6) and the inner friction element (14) of the slipping clutch (12) are located in a torque-locked manner on a common entraining sleeve (22) rotatably mounted on the roller shaft (2) to be installed so as to be fixed and non-rotatable.

4. A carrying roller according to any one of claims 1 to 3, **characterised in that** in the region of its end face remote from the slipping clutch (12), the roller casing (4) is mounted so as to be freely rotatable relative to the roller shaft (2), for which purpose a pivot bearing (26) is arranged in particular between a cap-like roller base (24), securely connected to the roller casing (4), and the roller shaft (2).

5. A carrying roller according to any one of claims 1 to 4, **characterised in that** the adjusting means (10) act upon the roller casing (4), from the interior and relative to the fixed roller shaft (2), in an axial direction by means of an adjustable pressure force (F_{D}) in such a manner that this pressure force (F_{D}) is transmitted to the slipping clutch (12) as a pretensioning force (F_{V}) via the roller casing (4) acting as a tension element.

6. A carrying roller according to any one of claims 1 to 5, **characterised in that** the bushing-like adjustment body (28) is located on the roller shaft (2) so as to be axially displaceable yet secured against rotation, wherein the adjusting screw (32) in the form of a hollow screw is arranged coaxially on the roller shaft (2) in a rotatable yet axially secured manner and at one end is connected to the adjustment body (28) via an adjustment thread (36) and at the other end has a force application point (38), for a turning tool, arranged so as to be accessible from outside of the roller casing (4).

7. A carrying roller according to any one of claims 1 to 6, **characterised in that** the pressure spring (30) in the form of a helical spring is located coaxially on the adjusting screw (32) and, on the opposite side to the adjustment body (28) acts in particular against the pivot bearing (26) of the roller base (24).

8. A carrying roller according to any one of claims 1 to 7, **characterised in that** the slipping clutch (12) or its inner friction element (14) is in an axial direction supported on a bearing (40) secured on the roller shaft (2), against the pretensioning force (F_{V}).

9. A carrying roller according to any one of claims 1 to 8, **characterised in that** for assembly attachment in a roller conveyor, both end faces of the roller shaft (2) have axial tapped bores (46) for the screwing in of assembly screws (48).

10. A carrying roller according to claim 9, **characterised in that** in the region of its force application point (38), preferably in the form of an exterior polygon, the adjusting screw (32) has a passage opening (50), aligned with the tapped bore (46) of the roller shaft (2), for one of the assembly screws (48) which thereby simultaneously serves to lock the adjusting screw (32).

11. A carrying roller according to any one of claims 1 to 10, **characterised in that** at its side axially facing the drive wheel (6), the slipping clutch (12) is covered by a cap-like covering element (52).

12. An accumulation roller conveyor having a multitude of carrying rollers (1), in particular parallel to one another and arranged horizontally, according to any one of the preceding claims.

13. An accumulation roller conveyor according to claim 12, **characterised in that** each carrying roller (1) is secured between two lateral bearing rails (54) **in that** on each side an assembly screw (48) is screwed through a hole opening (56) in the respective bearing rail (54) and securely screwed into a tapped bore (46) in the roller shaft (2).

14. An accumulation roller conveyor according to claim 12 or 13, **characterised in that** the bearing rails (54) are formed by C-profiles, wherein the drive wheels (6) of the carrying rollers (1), together with a drive element driveable in a circulatory manner and in particular in the form of a chain, are arranged within the associated C-profile.

15. An auxiliary tool with a carrying roller (1) according to any one of claims 1 to 11 or in the case of an accumulation roller conveyor according to any one of claims 12 to 14, namely for measurement of the drive torque transmitted in each case to the roller casing (4) via the slipping clutch arrangement (8), for the purpose of adjustment of the individual carrying rollers (1).

## Revendications

1. Rouleau porteur (1) pour une ligne de transporteur à rouleaux, formé par un arbre (2) central et une jupe de rouleau (4), disposée coaxialement à l'arbre (2), ainsi qu'une roue d'entraînement (6), qui est montée sur une extrémité de l'arbre (2) et dont le couple d'entraînement peut être transmis par l'intermédiaire d'un système d'accouplement à friction (8) sur la jupe (4) de telle sorte que le couple d'entraînement transmis dans chaque cas sur la jupe (4) se définit comme une superposition de deux couples partiels, à savoir un premier couple partiel fonction du poids, c'est-à-dire qui dépend de la valeur d'un poids (F_{G}) agissant radialement par rapport à l'arbre (2) perpendiculairement sur la jupe (4), et un deuxième couple partiel indépendant du poids, réglable manuellement comme valeur de base par l'intermédiaire de moyens de réglage (10),
**caractérisé en ce que** les moyens de réglage (10) pour le réglage du deuxième couple partiel sont disposés à l'intérieur de la jupe (4), ledit système d'accouplement à friction (8) étant formé par un seul accouplement à friction (12), disposé dans la zone d'une extrémité frontale de la jupe (4), orientée vers la roue d'entraînement (6), et muni d'un élément de friction (14) intérieur, relié de manière solidaire en rotation avec la roue d'entraînement (6), et un élément de friction (16) extérieur, relié de manière fixe à la jupe (4), lesdits deux éléments de friction (14, 16) étant reliés l'un à l'autre dans la direction radiale par l'intermédiaire de premières surfaces de friction (18) et dans la direction axiale par l'intermédiaire de deuxièmes surface de friction (20), le premier couple partiel pouvant être transmis par l'intermédiaire des premières surfaces de friction (18) et le deuxième couple partiel pouvant être transmis par l'intermédiaire des deuxièmes surfaces de friction (20), étant entendu qu'à l'intérieur de la jupe (4) sur l'arbre (2) entre un corps de réglage (28) et l'extrémité frontale de la jupe (4), éloignée de l'accouplement à friction (12), est disposé un ressort de pression (30), dont il est possible de faire varier la précontrainte au moyen d'une vis de réglage (32).

2. Rouleau porteur selon la revendication 1, **caractérisé en ce que** les moyens de réglage (10) sont conçus pour faire varier une force de précontrainte (F_{V}) axiale des deuxièmes surfaces de friction (20).

3. Rouleau porteur selon la revendication 1 ou 2, **caractérisé en ce que** la roue d'entraînement (6) et l'élément de friction (14) intérieur de l'accouplement à friction (12) sont montés de manière solidaire en rotation sur un manchon d'entraînement (22) commun, monté rotatif sur l'arbre (2) à monter de manière fixe, non rotative.

4. Rouleau porteur selon l'une quelconque des revendications 1 à 3, **caractérisé en ce que** la jupe (4) dans la zone de son extrémité frontale éloignée de l'accouplement à friction (12), est montée de manière librement rotative par rapport à l'arbre (2), un palier de rotation (26) étant disposé en particulier entre un fond de rouleau (24), en forme de capuchon et relié de manière fixe à la jupe (4), et l'arbre (2).

5. Rouleau porteur selon l'une quelconque des revendications 1 à 4, **caractérisé en ce que** les moyens de réglage (10) sollicitent la jupe (4) depuis l'intérieur par rapport à l'arbre (2) fixe, dans la direction axiale avec une force de pression (F_{D}) réglable, de telle sorte que ladite force de pression (F_{D}) est transmise en tant que force de précontrainte (F_{V}) sur l'accouplement à friction (12) par l'intermédiaire de la jupe (4) en remplissant la fonction d'un élément de traction.

6. Rouleau porteur selon l'une quelconque des revendications 1 à 5, **caractérisé en ce que** le corps de réglage (28), réalisé en forme de douille, est monté sur l'arbre (2) de manière mobile dans la direction axiale, mais immobile en rotation, la vis de réglage (32), sous forme de vis creuse, étant disposée coaxialement sur l'arbre (2) de manière mobile en rotation, mais immobile dans la direction axiale et étant reliée par une extrémité au corps de réglage (28) par l'intermédiaire d'un filetage de réglage (36) et comportant à l'autre extrémité une zone d'application de force (38) pour un outil rotatif, laquelle est accessible depuis l'extérieur de la jupe (4).

7. Rouleau porteur selon l'une quelconque des revendications 1 à 6, **caractérisé en ce que** le ressort de pression (30), sous forme de ressort hélicoïdal, est monté coaxialement sur la vis de réglage (32) et agit sur le côté opposé au corps de réglage (28), en particulier contre le palier de rotation (26) du fond de rouleau (24).

8. Rouleau porteur selon l'une quelconque des revendications 1 à 7, **caractérisé en ce que** l'accouplement à friction (12), plus précisément son élément de friction (14) intérieur, est supporté, à l'encontre de la force de précontrainte (F_{V}), dans la direction axiale contre un palier (40) fixé sur l'arbre (2).

9. Rouleau porteur selon l'une quelconque des revendications 1 à 8, **caractérisé en ce que** pour le montage dans une ligne de transporteur à rouleaux, l'arbre (2) comporte sur ses deux extrémités frontales des forures taraudées (46) axiales pour le vissage des vis de montage (48).

10. Rouleau porteur selon la revendication 9, **caractérisé en ce que** la vis de réglage (32), au niveau de sa zone d'application de force (38) - réalisée, de préférence, sous forme de polygone extérieur -, comporte un trou débouchant (50), aligné avec la forure taraudée (46) de l'arbre (2) et destiné à recevoir l'une des vis de montage (48) qui, de ce fait, sert également à bloquer la vis de réglage (32).

11. Rouleau porteur selon l'une quelconque des revendications 1 à 10, **caractérisé en ce que** l'accouplement à friction (12), sur son côté orienté axialement vers la roue d'entraînement (6), est masqué par un élément de recouvrement (52) en forme de capuchon.

12. Ligne pour transporteur à rouleaux, comportant une pluralité de rouleaux porteurs (1), disposés en particulier parallèlement entre eux et horizontalement, selon l'une quelconque des revendications précédentes.

13. Ligne pour transporteur à rouleaux selon la revendication 12, **caractérisée en ce que** chaque rouleau porteur (1) est fixé entre deux rails de support (54) latéraux, du fait que sur chaque côté une vis de montage (48) est vissée, en passant à travers un trou débouchant (56) du rail de support (54) concerné, de manière fixe dans une forure taraudée (46) axiale de l'arbre (2).

14. Ligne pour transporteur à rouleaux selon la revendication 12 ou 13, **caractérisée en ce que** les rails de support (54) sont formés par des profilés en C, les roues d'entraînement (6) des rouleaux porteurs (1) étant disposées, conjointement avec un élément d'entraînement apte à être entraîné en rotation et réalisé, en particulier, sous forme de chaîne, à l'intérieur du profilé en C correspondant.

15. Outil auxiliaire avec un rouleau porteur (1) selon l'une quelconque des revendications 1 à 11 et respectivement une ligne pour transporteur à rouleaux selon l'une quelconque des revendications 12 à 14, destiné à mesurer le couple d'entraînement transmis dans chaque cas sur la jupe (4) par l'intermédiaire du système d'accouplement à friction (8), en vue du réglage de chacun des rouleaux porteurs (1).
